(19) Europäisches Patentamt
European Patent Office
Office européen des brevets

(11) **EP 2 877 810 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **13737625.7**

(22) Anmeldetag: **18.07.2013**

(51) Int Cl.:
*G01B 9/02* (2006.01)

(86) Internationale Anmeldenummer:
**PCT/EP2013/065222**

(87) Internationale Veröffentlichungsnummer:
**WO 2014/016200 (30.01.2014 Gazette 2014/05)**

(54) **INTERFEROMETRISCHE ENTFERNUNGSMESSANORDNUNG UND EBENSOLCHES VERFAHREN**

INTERFEROMETRIC DISTANCE MEASURING ASSEMBLY AND METHOD

DISPOSITIF DE MESURE DE DISTANCE INTERFÉROMÉTRIQUE ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2012 EP 12177582**

(43) Veröffentlichungstag der Anmeldung:
**03.06.2015 Patentblatt 2015/23**

(73) Patentinhaber: **Hexagon Technology Center GmbH**
**9435 Heerbrugg (CH)**

(72) Erfinder: **JENSEN, Thomas**
**CH-9400 Rorschach (CH)**

(74) Vertreter: **Kaminski Harmann Patentanwälte AG**
**Landstrasse 124**
**9490 Vaduz (LI)**

(56) Entgegenhaltungen:
WO-A1-02/056075    WO-A1-2009/036861
DE-A1- 19 808 273    US-B2- 7 576 864

• ALFANO R R ET AL: "Free-Space Supercontinuum Coherence Data Packets Multiplexing and Demultiplexing for Ultrafast Laser Communication", IEEE JOURNAL OF SELECTED TOPICS IN QUANTUM ELECTRONICS, IEEE SERVICE CENTER, PISCATAWAY, NJ, US, Bd. 10, Nr. 5, 1. September 2004 (2004-09-01), Seiten 1233-1237, XP011123231, ISSN: 1077-260X, DOI: 10.1109/JSTQE.2004.837206
• BEAU A STANDISH ET AL: "In vivo endoscopic multi-beam optical coherence tomography", PHYSICS IN MEDICINE AND BIOLOGY, INSTITUTE OF PHYSICS PUBLISHING, BRISTOL GB, vol. 55, no. 3, 7 February 2010 (2010-02-07), pages 615-622, XP020171750, ISSN: 0031-9155

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine interferometrische Entfernungsmessanordnung zum Vermessen von Oberflächen nach dem Oberbegriff des Anspruchs 1 und ein ebensolches Verfahren nach dem Oberbegriff des Anspruchs 10.

In vielen Anwendungsbereichen besteht das Bedürfnis, Oberflächen von Objekten und damit die Objekte selbst mit hoher Genauigkeit zu vermessen. Dies gilt insbesondere für die fertigende Industrie, für die das Vermessen und Überprüfen von Oberflächen von Werkstücken hohe Bedeutung hat. Für diese Anwendungen existiert eine Reihe von Messgeräten, die für spezielle Aufgaben ausgelegt sind und auch als Koordinatenmessgeräte oder -maschinen bezeichnet werden. Diese Messgeräte vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in US 5,402,582 oder EP 1 474 650 beschrieben. Andere Verfahren verwenden optische Messstrahlung, um Oberflächen berührungslos abtasten zu können.

Ein aus dem Stand der Technik bekannter Ansatz beruht hierbei auf interferometrischen Verfahren, wie beispielsweise der optischen Kohärenztomographie bzw. Optical Coherence Tomography (OCT), wie sie beispielsweise in der WO 2009/036861 oder der europäischen Patentanmeldung mit der Anmeldenummer 11171582.7 beschrieben werden. Die dort geoffenbarten Entfernungsmessverfahren nutzen zur Vermessung von Oberflächen einen frequenzmodulierter Laserstrahl zur Bereitstellung von Messstrahlung, welche auf die Oberfläche emittiert wird. Die von der Oberfläche zurückgestreute Messstrahlung wird wieder empfangen und dient zum interferometrischen Entfernungsmessen von einem Bezugspunkt zur Oberfläche, d.h. in der sogenannten z-Richtung, wobei ein Mess- und ein Referenzarm Verwendung finden. Beau A Standish et.al: "In vivo endoscopic multibeam optical coherence tomography", Physics in Medicin and Biology 55, S.615-622, Bristol 2010, offenbart ein OCT-System für biologischmedizinische Bildgebung, mit welchem mit mehreren versetzten Messkanälen mehrere Gewebebilder von verschiedenen, hintereinander gesetzten Messtiefen gewonnen und zusammengesetzt werden können.

In den meisten Ausführungsbeispielen erfolgt das Abtasten der Oberfläche mit einem einzigen Meßkanal, der die Distanz zu einem Punkt auf der Oberfläche vermißt, wobei die Oberfläche durch Verfahren des gesamten Probenkopfes über den Pfad von Messpunkten auf der Oberfläche erfolgt. Für eine Vielzahl von Anwendungen besteht jedoch das Bedürfnis, gleichzeitig oder schnell hintereinander eine größere Zahl von Punkten entfernungsmessend abzutasten, ohne dass hierzu der Probenkopf mit der Optik der Reihe nach über jeden zu vermessenden Punkt bewegt werden muss.

Ein aus dem Stand der Technik bekannter Ansatz besteht darin, ein- oder zweidimensional scannende Spiegel zu nutzen, um den Meßstrahl über die Oberfläche bewegen zu können, ohne dass hierfür eine Bewegung des Probenkopfes bzw. der gesamten Messanordnung erforderlich werden. Entsprechende Realisierungen mit mikromechanischen Elementen für interferometrische Meßanordnungen im medizinischen Bereich sind beispielsweise in J. Sun et al., "MEMS-based endoscopic OCT", Int. J. of Opt., 2011 beschrieben. Der Nachteil dieser spiegelbasierten Lösungen ist jedoch die nach wie vor sequentielle Abtastung räumlich ausgedehnter Objekte, welche die realisierbare Geschwindigkeit verringert. Eine Erhöhung ist nur durch gesteigerte Abtastraten oder durch Parallelisierung des Messprozesses orthogonal durch Verwendung von mehreren Kanälen möglich.

Daher werden in der WO 2009/036861 sowohl Probenköpfe beschrieben, bei denen der Strahlengang der Messstrahlung in zwei Kanäle aufgespalten wird, deren Emissions- und Empfangsrichtung zueinander orientiert ist, als auch solche, bei denen eine Mehrzahl von räumlich parallelen Kanälen realisiert sind. Die Messkanäle können bei diesen Ansätzen zeitlich parallel oder sequentiell genutzt werden, wobei bei zeitgleicher Verwendung entweder zwei oder mehr separate Messanordnungen oder aber auch eine einzige Messanordnung mit einer Trennung der Kanäle, z.B. durch unterschiedliche Polarisationsrichtungen, möglich ist. Eine solche Ausbildung des Probenkopfes erlaubt beispielsweise eine Vermessung von Kanten oder Stufen. Allerdings ist durch die polarisationsabhängige Trennung der Aufbau kompliziert und die Zahl der verwirklichbaren Kanäle begrenzt.

In Hinblick auf das zugrundeliegende Meßprinzip sind für die optische Kohärenztomographie sowohl sehr schnell durchstimmbare Quellen, wie sie bspw. in T. Klein et al., "Megahertz OCT for ultrawide-field retinal imaging with a 1050nm Fourier domain mode-locked laser", Opt. Express 19, 3044-3062 (2011), als auch sehr schnelle in der Fourier-Domäne spektral auflösende Ansätze mit Hochgeschwindigkeits-Zeilen-CCDs bekannt, wie sie bspw. in Y.K. Tao et al., "High-speed complex conjugate resolved retinal spectral domain optical coherence tomography using sinusoidal phase modulation", Opt. Lett. 32, 2918 (2007) beschrieben werden.

Beide Verfahren zeigen jedoch einen Mangel an verfügbarer Kohärenzlänge, wie sie im Bereich der industriellen Meßtechnik benötigt wird, bspw. für den Einsatz in gattungsgemässen Koordinatenmeßmaschinen bzw. -geräten.

Für Verfahren der optischen Kohärenztomographie im Zeitbereich (Time-Domain OCT) mit breitbandigen Quellen würde dies aufgrund der geringen Kohärenzlänge eine zusätzliche Abtastung in der z-Richtung, d.h. in der Flächennormalen der zu vermessenden Oberfläche, erfordern, was wiederum zusätzliche Antriebe und erhöhte Komplexität bedingt, vgl. T. Dresel et al., "Three-dimensional sensing of rough surfaces by coherence radar", Appl. Opt. 31, 919 (1992).

Verfahren der optischen Kohärenztomographie im Frequenzbereich (Frequency-Domain OCT), d.h. mit spektraler Auflösung, könnten durch Verwendung eines Flächensensors anstelle eines Zeilensensors in ihrer Fähigkeit zum parallelen Abtasten weiterentwickelt werden. Nachteilig sind hier jedoch die geringen Frame-Raten bzw. Auslesegeschwindigkeiten sowie die ebenfalls geringen typischen Kohärenzlängen in der Größenordnung von einigen wenigen Millimetern.

Dabei kann auch der Ansatz der frequenzmodulierten OCT durch Verwendung von Zeilen- oder Flächensensoren in den zwei- oder dreidimensionalen Abtastbereich erhöht werden. Da hierbei aufgrund der erforderlichen Abtastung des Interferogramms mit Hunderten von Datenpunkten auch eine entsprechenden Aufnahme vieler hundert Datenfelder mit dem Zeilen- oder Flächensensors für eine vollständige Messung nötig ist, sind solche Verfahren im Vergleich zu typischen FD-OCT Verfahren sehr langsam (< 100Hz), vgl. bspw. S.W. Lee et al., "Line-field optical coherence tomography using frequency-sweeping source", IEEE J. Selec. Top. Quant. Electr. 14, 50 (2008).

Ein wesentlicher gemeinsamer Nachteil ist hierbei auch die verwendete Auslegung des Probenkopfs in Freistrahloptik, wobei die Datenerzeugung durch Zeilen- oder Flächensensoren erfolgt. Dies bedeutet, dass eine räumliche Aufteilung von Probenkopf und Signalerzeugung und Signalverarbeitung mit einer Verbindung durch eine Monomode-Faser nicht mehr möglich ist. Neben der hierdurch gesteigerten Komplexität des Probenkopfes und dessen erhöhter Masse wirkt sich insbesondere die durch den Stromverbrauch bewirkte Erwärmung des Probenkopfes negativ aus. Es ist im Bereich der Koordinatenmesstechnik allgemein vorteilhaft, die über die Oberfläche bewegten Komponenten möglichst passiv zu gestalten, so dass keine thermischen Einflüsse resultieren können, welche die zur Bewegung verwendete Trägerstruktur deformieren. Zudem führt eine geringe Masse der zu bewegenden Komponenten, insbesondere aber des Probenkopfes zu einer verbesserten Dynamik und zu geringeren beschleunigungsabhängigen Deformationen der Tragstruktur.

Eine Aufgabe besteht darin, eine verbesserte Entfernungsmessanordnung bzw. ein entsprechendes Messgerät zur Vermessung von Oberflächen bzw. zur Erfassung von Oberflächentopographien sowie ein ebensolches Verfahren bereitzustellen.

Eine weitere Aufgabe besteht darin, eine solche verbesserte Entfernungsmessanordnung bzw. ein solches Verfahren bereitzustellen, welches eine Vermessung einer Mehr- oder Vielzahl von Punkten ohne Bewegung des Probenkopfes bei geringer Komplexität des Aufbaus und geringer thermischer Belastung der Tragstrukturen erlaubt.

Diese Aufgaben werden durch die Gegenstände der Ansprüche 1 bzw. 10 oder der abhängigen Ansprüche gelöst bzw. die Lösungen weitergebildet.

Die Erfindung nutzt ein interferometrisches Messprinzip mit hinsichtlich der Wellenlänge modulierter, d.h. mit veränderlicher Wellenlänge emittierender Laserquelle, wobei die Messungen in der Frequenzdomäne erfolgen. Hierbei wird die von einer Laserquelle, z.B. einer Laserdiode erzeugte Laserstrahlung moduliert, indem eine Wellenlängenrampe durchlaufen und somit die Strahlung in ihrer optischen Frequenz verändert wird. Einer zentralen Wellenlänge bzw. optischen Frequenz wird z.B. eine sinusförmige Modulation aufgeprägt. Ausgewertet wird das gemessene Interferogramm dann z.B. über eine halbe Periode der Modulationsfrequenz, in der die optische Frequenz monoton steigt oder fällt, was im Folgenden auch als Wellenlängenrampe bezeichnet wird. Aufgrund des durchstimmbaren Lasers als sehr schmalbandiger Quelle liegen alle Interferenzeffekte in dem gleichen Kohärenzbereich.

Die Wellenlängenrampe kann hierbei als klassische Rampe, d.h. mit einer im wesentlichen linear ansteigenden oder abfallenden Folge von zu durchlaufenden Wellenlängen ausgebildet sein. Alternativ kann aber die Menge der unterschiedlichen Wellenlängen auch wahlfrei aufmoduliert werden, d.h. in einer von der linear gereihten Folge abweichenden Weise, solange nur die Menge der Wellenlängen während eines Hubs der Rampe einmal erfaßt und aufmoduliert wird. Der Begriff der Wellenlängenrampe umfasst somit im weiteren sinn eine Menge von unterschiedlichen Wellenlängen, die zwar in eine auf- oder absteigende Abfolge gebracht werden können, nicht aber notwendigerweise in dieser Abfolge durchlaufen und aufmoduliert werden. Allerdings wird eine bevorzugte Ausführungsform mit einer Folge von abwechselnd auf- und abfallenden linearen Rampen ausgebildet.

Hierfür geeignete Verfahren und Komponenten werden in der WO 2009/036861 oder der europäischen Patentanmeldung mit der Anmeldenummer 11171582.7 beschrieben. Die Erfindung basiert darauf, dass wenigstens zwei optische Sendekanäle, die auch zum Empfang Verwendung finden können, realisiert werden, wobei eine zeitlich parallele Emission der Messstrahlung erfolgt. Erfindungsgemäss wird der durch die Kohärenzlänge vorgegebene mögliche Messbereich, d.h. die realisierbare Gesamtmesstiefe, im Resultat distanzseitig aufgeteilt, so dass für jeden der Kanäle eine Verschiebung der Nulllage erfolgt. Jeder Kanal erhält somit einen Teilbereich des Messbereichs mit seiner jeweiligen Messtiefe zugeordnet, wobei die jeweilige Verschiebung der Nullage für einen Kanal bekannt und daher bei den Messungen bzw. deren Auswertung berücksichtigbar ist. Die Kanäle messen somit trotz unterschiedlicher Nulllagen bei einer glatten Oberfläche als Endergebnis die gleiche Distanz, wozu vor der Signalverarbeitung durch Verzögerungsstrecken unterschiedlich gestaffelte Distanzen erzeugt werden, die bei der Auswertung bekannt sind und entsprechend berücksichtigt werden. Anders ausgedrückt, die Bezugspunkte für die Messungen sind von Kanal zu Kanal verschoben, können aber rechnerisch abgeglichen werden. Um ein Übersprechen bzw. Überlappen der Kanäle zu vermeiden, ist die Optik beispielsweise so auszulegen, dass der sinnvolle Messbereich durch eine entsprechend starke Fokussierung physikalisch limitiert ist. Auch sollten die Messobjekte keine zu hohe starke Variation der Topographie aufweisen und beispielsweise eher flächenhaft sein. In der Signalverarbeitung definiert die Breite der Bandpassfilter die unterteilten Messbereiche in Übereinstimmung mit den physikalischen Gegebenheiten der Messoptik. Der maximal zu unterteilende Gesamtmessbereich ist durch die Kohärenzlänge begrenzt. Die Maximalgrenze einer solchen Staffelung von Kanälen wird dabei durch das Verhältnis von Gesamtmessbereich zu noch auflösbaren und nutzbaren unterteilten Messbereichen gegeben, sowie die zunehmende Abnahme der optischen Leistung in den Kanälen.

Die Verschiebung des Nullpunktes bzw. der Nulllage wird durch unterschiedlichen Verzögerungen für die Kanäle realisiert, die dadurch bewirkt werden, dass der Strahlengang durch ein ausgewähltes, von der Luft abweichendes Medium geführt wird, so dass der durch die Kohärenzlänge definierte Messbereich in einzelne Abschnitte aufgespalten und somit die Kohärenzlänge unterteilt wird. Normalerweise zeigt das Fourier-Spektrum bzw. Tomogramm bei technischen Messungen von für die Messstrahlung undurchlässigen Oberflächen, insbesondere für MetallOberflächen, nur ein einziges Maximum. Somit wird ein Grossteil des Raums in der Frequenz-Domäne nicht für die Messung genutzt. Durch die Aufteilung des gesamten, aufgrund der gegebenen Kohärenzlänge der Quelle zur Verfügung stehenden Meßbereichs kann eine Parallelisierung erreicht werden. Dabei kann grundsätzlich die erzielbare Genauigkeit erhalten bleiben, wobei aber durch die Aufteilung die Energie auf die verschiedenen Kanäle verteilt wird, was sich jedoch durch die Verwendung von Verstärkern kompensieren läßt.

Diese als Frequenz-Multiplexing bezeichnete Verlagerung der Nullpunkte kann in baulich kompakter Ausführung realisiert werden, bei der die unterschiedlichen Pfadlängen in verzögernden Medien durch räumlich integrierbare Elemente, wie z.B. Glaselementen oder optische Fasern, verwirklicht werden kann.

Zusätzlich können zur Vermeidung von Übersprechen bzw. Cross-Talk Kohärenzverzögerungsstrecken verwendet werden, deren relativer Längenabstand zwischen aufeinanderfolgenden Kanälen jeweils grösser als die Kohärenzlänge ist.

Der Ansatz kann auch mit einem chromatischen Multiplexing kombiniert werden, z.B. um zweidimensionale, insbesondere matrixartige Aperturanordnungen zu gestalten. Erfindungsgemäss wird dann zusätzlich für einen gegebenen Emissionszeitpunkt jedem der Kanäle oder aber einer Menge von Kanälen ein Teilbereich der zu durchlaufenden Wellenlängenrampe, d.h. ein Wellenlängen- und Frequenzband zugewiesen, dem die zu diesem Zeitpunkt emittierte Strahlung in Hinblick auf ihre aufzumodulierenden Wellenlängen zugeordnet ist.

Dabei kann jedem Kanal ein statischer Teilbereich der Wellenlängenrampe zugewiesen werden, d.h. die über andere Kanäle emittierte Messstrahlung wird nicht mit diesem Teil der Wellenlängenrampe moduliert. Im Vergleich zur Wellenlängenrampe erfolgt eine Modulation mit geringerem Hub, d.h. die Wellenlängenrampe wird in Teilrampen und die Gesamtmodulation in Teilmodulationen aufgespalten. Dabei kann die Wellenlängenrampe in ihrer Gesamtheit auf alle Kanäle gleichmässig oder auch ungleichmässig, d.h. mit nicht einheitlichem Wellenlängenhub pro Kanal, aufgespalten werden. Grundsätzlich kann aber auch ein Teil der Wellenlängenrampe ungenutzt bleiben oder für andere Zwecke, z.B. für eine interne Kalibrier- oder Referenzmessung, Verwendung finden. Eine komponentenseitige Realisierung dieses Ansatzes kann beispielsweise durch eine chromatische Trennung mittels Strahlteiler, insbesondere auch durch eine abgestufte Folge von Strahlteilern erfolgen. Eine Trennbarkeit der Kanäle ergibt sich somit durch deren durch Aufteilung realisierte spektrale Beschränktheit.

Das hierdurch bewirkte chromatische Multiplexing nutzt damit die grosse Breite (100 bis 200 nm) der Wellenlängenrampe verfügbarer Quellen, welche in Teilbereiche aufgespalten wird. Hierdurch wird zwar nicht die nutzbare Kohärenzlänge beeinflusst, allerdings wird die räumliche Auflösung im Umfang der Parallelisierung reduziert. Aufgrund der hohen Genauigkeit ($3\sigma$ ~20-30nm) der optischen Kohärenztomographie im Frequenzbereich, kann eine Verringerung der Meßgenauigkeit für technische Oberflächen meist problemlos hingenommen werden. Erfindungsgemäss werden somit durch wenigstens einen Strahlteiler Kanäle für die parallele Emission von Messstrahlung definiert werden, denen jeweils ein unterschiedlicher Teilbereich der Wellenlängenrampe zugewiesen wird. Jeder Kanal weist an seinem Ausgang eine andere konkret anliegende spektrale Verteilung auf, mithin eine andere chromatische Charakteristik. Durch die Kombination von chromatischem und Frequenz-Multiplexing wird somit empfangsseitig eine Trennung und Zuordnung der Signale zu einer Mehrzahl von Kanälen ermöglicht.

Durch den erfindungsgemässen Ansatz ist es möglich, eine interferometrische Entfernungsmeßanordnung nach dem Prinzip der optischen Kohärenztomographie im Frequenzbereich zu realisieren, bei der bei Parallelisierung des Meßvorgangs eine Trennung von Probenkopf und Signalverarbeitung und deren Verbindung über eine einzelne Monomode-Faser möglich wird. Der über die Oberfläche zu bewegende Probenkopf kann hierdurch elektronisch passiv und ohne Erzeugung von thermischer Belastung ausgelegt werden. Durch die Verwendung des Frequenz-Multiplexing, insbesondere auch in Verbindung mit einem zusätzlichen chromatischen Multiplexing, kann die Meßrate für die parallelisierte Messung mit zeilen- oder matrixförmiger Anordnung der Kanäle auf dem Niveau der Einzelpunktmessung gehalten werden.

Erfindungsgemässe Entfernungsmessanordnungen werden nachfolgend anhand von in der Zeichnung schematisch dargestellten Ausführungsbeispielen rein beispielhaft näher beschrieben oder erläutert. Im einzelnen zeigen

Fig.1 die schematische Darstellung der interferometrischen Messanordnung in einem Messgerät des Stands der Technik zur Vermessung von Oberflächen;

Fig.2 die Darstellung des strukturellen Aufbaus eines Probenkopfs für ein ebensolches Messgerät;

Fig.3 die schematische Darstellung von Sende- und Empfangsoptik für ein ebensolches Messgerät;

Fig.4 die Darstellung des strukturellen Aufbaus eines Probenkopfs für eine erfindungsgemässe Entfernungsmessanordnung;

Fig.5 die schematische Darstellung eines ersten Ausführungsbeispiels für den Optikteil einer erfindungsgemässen Entfernungsmessanordnung;

Fig.6 die schematische Darstellung eines zweiten Ausführungsbeispiels für den Optikteil einer erfindungsgemässen Entfernungsmessanordnung;

Fig.7 die schematische Darstellung eines dritten Ausführungsbeispiels für den Optikteil einer erfindungsgemässen Entfernungsmessanordnung;

Fig.8 die schematische Darstellung eines vierten Ausführungsbeispiels für den Optikteil einer erfindungsgemässen Entfernungsmessanordnung;

Fig.9 die schematische Darstellung der Aperturenanordnung einer Sende- und Empfangsoptik für eine erfindungsgemässe Entfernungsmessanordnung;

Fig.10 die schematische Darstellung eines ersten Ausführungsbeispiels für den Basisteil einer erfindungsgemässen Entfernungsmessanordnung;

Fig.11 die schematische Darstellung der Verteilung der E-Felder in der Frequenz-Domäne;

Fig.12 die schematische Darstellung der Verteilung der detektierten Intensitäten aus mehreren Interferogrammen in der Frequenz-Domäne;

Fig.13 die schematische Darstellung eines zweiten Ausführungsbeispiels für den Basisteil der erfindungsgemässen Entfernungsmessanordnung und

Fig.14 die schematische Darstellung einer Aperturenanordnung einer Sende- und Empfangsoptik für das zweite Ausführungsbeispiel für den Basisteil der erfindungsgemässen Entfernungsmessanordnung.

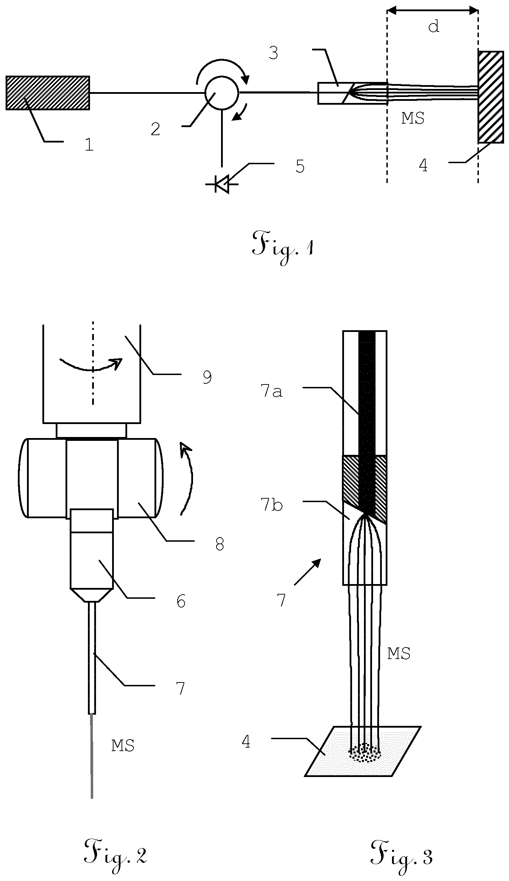

Fig.1 zeigt die schematische Darstellung der interferometrischen Messanordnung in einem Messgerät des Stands der Technik zur Vermessung von Oberflächen, wie es bspw. in der WO 2009/036861 A1 oder der europäischen Patentanmeldung mit der Anmeldenummer 11171582.7 beschrieben ist. Eine solche Anordnung verwendet eine wellenlängenmodulierte Laserquelle 1 zur Erzeugung wenigstens eines Laserstrahls und einen Strahlungsdetektor 5 zum Empfang der von einer Oberfläche 4 zurückgestreuten Messstrahlung MS. Die modulierte Laserquelle ist dabei vorzugsweise so ausgelegt, dass sie eine Kohärenzlänge von mehr als 1 mm, insbesondere im Bereich von 1 Millimeter bis 20 Zentimeter aufweist, z.B. eine zentrale Wellenlänge zwischen 1,3 und 1,7 $\mu$m und einen durchstimmbaren Wellenlängenbereich von mehr als 40 nm bei einer dynamischen Linienbreite von unter 0,02 nm bei einer Kohärenzlänge von 60 mm oder mehr besitzt. Die Kohärenzlänge erlaubt somit auch Messungen über eine Tiefen- bzw. Entfernungsbereich von einigen Zentimetern.

Die von der Laserquelle 1 erzeugte Laserstrahlung wird über einen optischen Zirkulator 2 in den zur Messung verwendeten Interferometeraufbau, der beispielhaft in Common-Path-Geometrie ausgebildet ist, also einen teilweise gemeinsamen Interferometer-Strahlengang für Mess- und Referenzarm aufweist, eingekoppelt. Der Referenzarm wird hierbei durch einen Reflex an der optischen Austrittsfläche einer Gradientenindex-Linse definiert, so dass eine konstante, insbesondere bekannte Distanz festgelegt ist, wobei weitere Rückreflektionen vermieden werden. Damit liegt die Referenzfläche in einer die Komponenten der Sende- und Empfangsoptik integrierende Sende-/Empfangsoptik 3 innerhalb der zum Emittieren des Laserstrahls verwendeten Strahlformungsoptik. Der Messarm wird hingegen durch die Reflektion an der zu vermessenden Oberfläche 4 definiert. Das rückreflektierte Licht von Mess- und Referenzarm wird schliesslich über den optischen Zirkulator 2 wieder auf den Strahlungsdetektor 5 geführt, der vorzugsweise als InGaAs-Detektor mit einer Bandbreite von mehr als 100 MHz ausgebildet ist. In einer hier nicht dargestellten Auswerteeinheit kann schliesslich die zu messende Distanz d bestimmt werden.

Zusätzlich kann auch ein hier nicht dargestelltes Kalibrierinterferometer mit einem optischen Detektor zur Berücksichtigung bzw. Kompensation von Nichtlinearitäten im Durchstimmverhalten verwendet werden, wobei dieses Kalibrierinterferometer insbesondere in Etalon- oder Mach-Zehnder-Konfiguration ausgeführt sein kann.

Eine solche Entfernungsmessanordnung kann bspw. in einen Probenkopf eines Koordinatenmessgerätes zur abtastenden Vermessung integriert sein, wie es bspw. aus der WO 2009/036861 A1 bekannt ist. In der Fig.2 wird der strukturellen Aufbau eines solchen Probenkopfs für ein ebensolches Messgerät veranschaulicht. Das Koordinatenmessgerät weist hierbei Führungsmittel zur definiert abtastenden Führung des Probenkopfes über die zu vermessende Oberfläche und der Probenkopf wenigstens einen Emissions- und Empfangsstrahlgang zur Emission der Messstrahlung MS der interferometrischen Entfernungsmessanordnung auf.

Der Probenkopf wird, durch ein Armelement 9 und ein Gelenk 8 als Führungsmittel definiert, abtastend über die zu vermessende Oberfläche geführt, wobei auch eine Rotation des Gelenks 8 gegenüber dem Armelement 9 möglich ist. Durch die Rotierbarkeit gegenüber dem Armelement 9 und das nachfolgende Gelenk 8 kann der Probenkopf gewinkelten oder stark veränderlichen Oberflächenverläufen gut folgen. Grundsätzlich können jedoch noch weitere rotatorische oder translatorische Freiheitsgrade in die Führungsmittel integriert werden, um eine weiter verbesserte Führung des Probenkopfes zu ermöglichen.

Der Probenkopf weist wenigstens einen oberflächenseitigen Emissions- und Empfangsstrahlengang des Messstrahls MS auf. In diesem Ausführungsbeispiel werden die Strahlengänge durch eine dünne Röhre als Tastglied 7 geführt, welche die Sende-/Empfangsoptik beinhaltet. Im an diese Röhre anschliessenden dickeren Basisteil 6 des Probenkopfes kann bereits der Strahlungsdetektor selbst oder aber Lichtleiter zur Weiterleitung an einen andernorts integrierten Strahlungsdetektor angeordnet sein, wobei eine Schnittstelle zur optischen und/oder elektrischen Übertragung von Signalen und eine Kupplung zwischen Basisteil 6 des Probenkopfes und Gelenk 8 eine Auswechselbarkeit gewährleistet.

Fig.3 zeigt schematisch die Integration von Sende-/Empfangsoptik in die Röhre des Probenkopfes. In dieser Ausgestaltung dient eine Faser 7a zur Führung der zu emittierenden wie auch der intern reflektierten sowie der extern reflektierten und wieder empfangenen Messstrahlung MS. Die Emission erfolgt hierbei durch eine in dem röhrenförmigen Teil angeordnete Gradientenindex-Linse 7b, welche die Messstrahlung auf die zu vermessende Oberfläche 4 emittiert und die von dort reflektierte Messstrahlung MS wieder in die Faser 7a einkoppelt. Die Lösungen des Stands der Technik sind jedoch zumeist nur auf Einzelmessungen ausgelegt, wobei durch abtastendes führen des Probenkopfes auch Oberflächen durchgängig erfasst werden können.

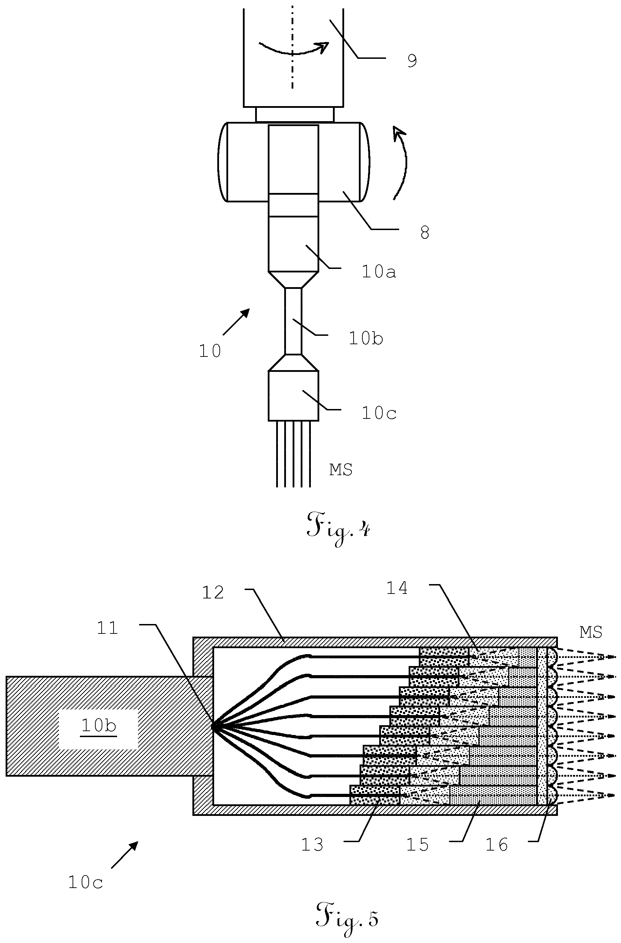

Der erfindungsgemässe Ansatz erlaubt jedoch eine verbesserte Parallelisierung und die Realisierung einer Mehr- oder Vielzahl von Messkanälen, so dass der in Fig.4 gezeigte strukturellen Aufbaus eines Probenkopfs 10 mit einer Mehrzahl von Kanälen bei einfachem strukturellem Aufbau möglich wird.

Der Probenkopf 10 mit einer erfindungsgemässen Entfernungsmessanordnung weist nunmehr einen Basisteil 10a auf, in dem Laserquelle und Auswerteelektronik angeordnet sein können. Alternativ können diese Komponenten jedoch auch Teil einer anderen Komponente des Messgerätes sein, wobei dann über eine oder mehrere Schnittstellen eine optische und/oder elektrische Verbindung zwischen Gelenk 8 und dem Basisteil 10a des Probenkopfes 10 bereitgestellt wird. Vorzugsweise ist der Basisteil 10a des Probenkopfes mit dem Optikteil 10c über eine Verbindungsröhre 10b verbunden, wobei die Verbindungsröhre 10b über einen optischen Leiter verfügt. Alternativ können jedoch auch hiervon abweichende Anordnungen zur Verwirklichung der erfindungsgemässen Entfernungsmessanordnung genutzt werden. So können bspw. auch alle Komponenten des Probenkopfes 10 in einer einzigen, kompakten Einheit konzentriert werden, so dass die Verbindungsröhre 10b entfällt.

Der Probenkopf 10 integriert somit alle oder den Grossteil der Komponenten der erfindungsgemässen interferometrische Entfernungsmessanordnung zur Vermessung von Oberflächen, wobei diese insbesondere nach dem Prinzip der optischen Kohärenztomographie ausgestaltet ist. Hierzu wird die hinsichtlich der Wellenlänge durchstimmbare Laserquelle zum Erzeugen von Messstrahlung MS moduliert, indem die Modulation eine lineare Wellenlängenrampe durchläuft oder die Wellenlänge in anderer, nicht notwendigerweise linearer Abfolge aus einer Menge von unterschiedlichen Wellenlängen auswählt. Im Probenkopf 10 ist ein optischer Strahlengang ausgebildet, wobei eine Sendeoptik zum Emittieren der Messstrahlung MS auf die Oberfläche und eine Empfangsoptik zum Empfangen der von der Oberfläche zurückgestreuten Messstrahlung MS im Optikteil 10c ausgebildet sind. Vorzugsweise nutzen hierbei Sende- und Empfangsoptik die gleichen Komponenten, so dass beide Optiken in integrierter Bauweise als kombinierte Sende- und Empfangsoptik ausgebildet sind, welche mit dem Strahlungsdetektor über eine, insbesondere eine einzige Monomode-Faser gekoppelt ist. Im Strahlengang wird in zum Stand der Technik gleicher Weise ein Messarm und einem Referenzarm definiert bzw. ausgebildet, wobei diese Interferometerarm insbesondere mit einem teilweise gemeinsamen Strahlengang von Mess- und Referenzarm als Common-Path-Interferometer ausgestaltet sind. Der Strahlungsdetektor und eine Auswerteinheit zum Bestimmen der Entfernung von einem Bezugspunkt der Entfernungsmessanordnung zur Oberfläche können entweder im Basisteil 10a des Probenkopfes 10 oder aber ausserhalb des Probenkopfes angeordnet sein, wobei in letzterem Fall der Probenkopf auf elektronische Komponenten verzichtet und somit vollständig passiv gehalten werden kann.

Im Basisteil 10a kann durch wenigstens einen Strahlteiler eine Aufteilung der Laserstrahlung erfolgen, so dass diese nachfolgend über Verzögerungsstrecken geführt wird und so eine Aufteilung des durch die Kohärenzlänge der Quelle vorgegebenen Messbereichs auf die Kanäle erfolgt. Hierdurch werden wenigstens zwei Kanäle für die parallele Emission von Messstrahlung MS, denen erfindungsgemäss jeweils ein unterschiedlicher Nullpunkt im Messbereich zugewiesen wird. Dies bedeutet, dass jedem Kanal ein unterschiedlicher Teilmessbereich zugewiesen wird, der für diesen Kanal zur Messung genutzt wird. Die Aufteilung des Messbereichs in Teilmessbereiche muss nicht notwendigerweise gleichförmig, d.h. in Teilbereiche gleicher Messtiefe erfolgen, sondern kann auch die Zuweisung unterschiedlicher Teilmessbereiche umfassen. Hierdurch können beispielsweise Kanäle mit unterschiedlicher Messcharakteristik realisiert werden, z.B. wenn bei einer Vermessung von Bohrlöchern Kanäle zur Vermessung der Innenfläche mit geringerem Messbereich parallel zu einem Kanal mit grösserem Messbereich zur Positionierung in der Längsachse des Bohrlochs ausgelegt werden.

Fig.5 zeigt die schematische Darstellung eines ersten Ausführungsbeispiels für den Optikteil einer erfindungsgemässen Entfernungsmessanordnung. Dieser Optikteil 10c ist über die Verbindungsröhre 10b des Probenkopfes mit dem Basisteil 10a verbunden, in dem auch die aus einem Strahlteiler herausgeführten optischen Fasern 11 der Kanäle verlaufen. Im Gehäuse 12 des Optikteils 10c werden die Fasern 11 über jeweils zugeordnete Ferrulen 13 in Gradientenindex-Linsen 14 eingekoppelt, die als Kollimatoren fungieren. Hierbei stellt der jeweilige Übergang von Ferrule 13 zu Gradientenindex-Linse 14 die rückreflektierende Oberfläche zur Festlegung des Referenzarms in Common-Path-Geometrie dar. Zumindest für n-1 der n Kanäle ist der Gradientenindex-Linse 14 eines jeden Kanals eine individuelle Verzögerungsstrecke für die Messstrahlung MS nachgelagert, die insbesondere durch Glaselemente 15 unterschiedlicher Länge realisiert werden kann, die in ihren Längen so gewählt sind, dass jedem der Kanäle ein unterschiedlicher Bruchteil des maximalen Messbereichs zugeordnet ist.

Die Enden der Verzögerungsstrecken 15 sind je nach Aperturengeometrie mit einer Zeile oder einer Matrix von Mikrolinsen 16 verbunden. Aufgrund der Verzögerungsstrecke weist nun jeder Kanal eine individuelle, durch das jeweilige Glaselement 15 als Verzögerungsstrecke bestimmte Länge $\delta L_i$ zwischen Fokuspunkt als Zieloberfläche und Übergang von Ferrule 13 zu Gradientenindex-Linse 14 auf.

Diese Längen $\delta L_i$ und die dadurch bewirkten Verzögerungen erlauben es, bei der Signalverarbeitung die Kanäle in der Fourier-Domäne zu trennen. Auch bei diesem Ausführungsbeispiel wird eine integrierte Sende- und Empfangsoptik verwendet, so dass die von der zu vermessenden Oberfläche zurückgeworfene Messstrahlung MS wieder über die Mikrolinsen 16 und Glaselement 15 geführt wird. Nach deren Passieren werden die detektierten Signale wieder durch einen Strahlteiler zusammengeführt und in eine einzige Monomode-Faser eingekoppelt und vermittels dieser zum Strahlungsdetektor geführt, welcher insbesondere auch ausserhalb des dann elektronisch passiven Probenkopfes angeordnet sein kann. Hierbei können durch den Strahlteiler verursachte Verluste durch nachgeschaltete Verstärker wieder kompensiert werden.

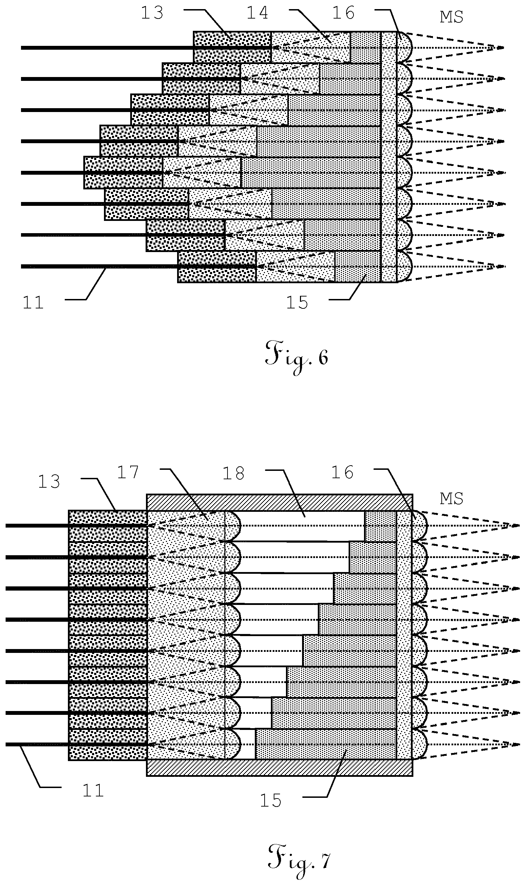

Alternative Ausführungsbeispiele eines zweiten und dritten Ausführungsbeispiels für den Optikteil einer erfindungsgemässen Entfernungsmessanordnung werden in Fig.6 und Fig.7 gezeigt.

Das in Fig.6 gezeigte zweite Ausführungsbeispiel verwendet für die Sende- und Empfangsoptik bei zu Fig.5 grundsätzlich gleichem Aufbau eine andere räumliche Abfolge der Längen der Verzögerungsstrecken. In diesem Ausführungsbeispiel werden die Glaselemente 15 nicht linear sondern von aussen nach innen anhand ihrer zunehmenden Längen und zudem alternierend angeordnet, so dass die kürzesten Glaselemente 15 aussen und die längsten Glaselemente 15 im Zentrum der Anordnung zu liegen kommen.

Das in Fig.7 gezeigte dritte alternative Ausführungsbeispiel für die Sende- und Empfangsoptik verwendet zwei getrennte Glassubstrate als Träger der optischen Komponenten, wobei sich zwischen den zur Emission der Messstrahlung MS verwendeten Mikrolinsen 16 und den Glaselementen 15 einerseits und den Ferrulen 13 mit einer nachgeordneten Zeile oder Matrix aus kollimierenden Mikrooptiken 17 andererseits ein freier, mit Luft gefüllter Zwischenraum 18 befindet.

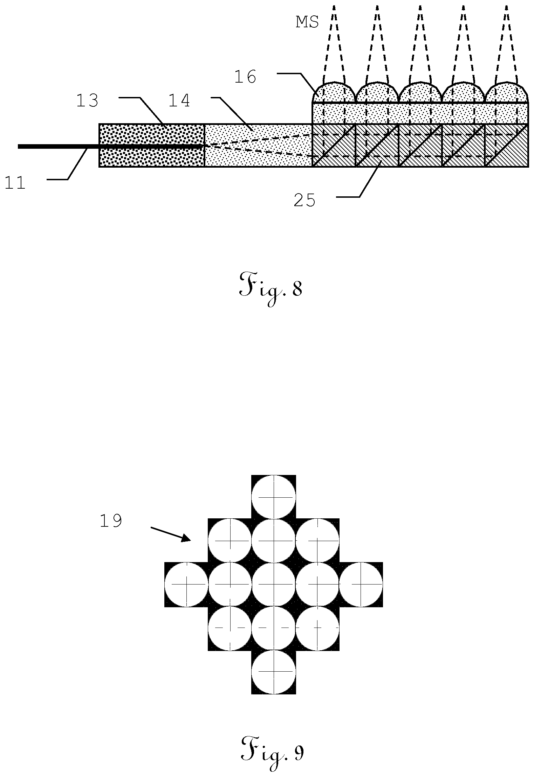

Das in Fig.8 gezeigte vierte alternative Ausführungsbeispiel für die Sende- und Empfangsoptik verwendet eine Folge von nicht-chromatischen Strahlteilern 25, welche eine von der Gradientenindex-Linse 14 her aufsteigende Reflektivität der Strahlteilerbeschichtung aufweisen, wie z.B. die Folge 20%, 25%, 33%, 50% und 100%. Die jeweils an einem der nicht-chromatischen Strahlteiler 25 austretende Messstrahlung MS wird über eine Mikrolinsenzeile 16 jeweils einzeln fokussiert.

Alternativ zur in Fig.7 dargestellten zeilenartigen Anordnungsweise kann jedoch auch eine matrixartige Aperturenanordnung 19 einer Sende- und Empfangsoptik für eine erfindungsgemässe Entfernungsmessanordnung verwendet werden, wie sie in Fig.9 schematisch dargestellt wird. Mit solchen zweidimensionalen Mikrolinsen- bzw. Aperturanordnungen können insbesondere flächig ausgedehnte Strukturen schnell und parallelisiert vermessen werden.

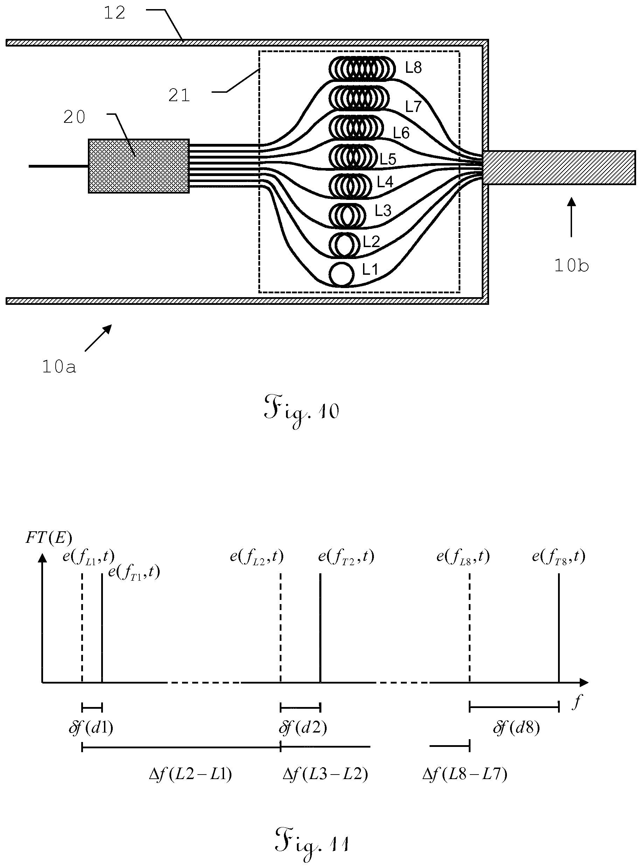

In Fig.10 wird der Aufbau eines ersten Ausführungsbeispiels für den Basisteil 10a einer erfindungsgemässen Entfernungsmessanordnung dargestellt. Im Gehäuse 12 bewirkt ein Strahlteiler 20, der als 1xn-Teiler, der beispielsweise als 2x2 Fused Fiber Coupler, Dünnfilm-Filter oder Planar-Lightwave-Circuit ausgebildet sein kann, eine Aufteilung der Laserstrahlung in die n verschiedenen Kanäle, die über eine Kohärenzverzögerungseinheit 21 geführt werden. Diese Kanäle weisen hierfür jeweils eine zugeordnete Kohärenzverzögerungsstrecke zur Vermeidung von Übersprechen zwischen den Kanälen auf, die insbesondere als optische Fasern L1-L8 ausgebildet sein kann. Der relative Längenabstand $\Delta L_i$ von Kanal $L_i$ zu Kanal $L_{i+1}$ ist dabei jeweils grösser als die Kohärenzlänge $L_{Coh}$ der Laserquelle

$$\Delta L_i = L_{i+1} - L_i > \frac{L_{coh}}{2}$$

Diese Kohärenzverzögerungsstrecken dienen dabei lediglich zum Vermeiden des Übersprechens, so dass u.U. darauf verzichtet werden kann, beispielsweise bei hinreichend großem Abstand der Kanäle. Die Aufteilung des Gesamtmessbereichs in Teilbereiche wird hingegen durch die Verzögerungsstrecken bzw. die hierdurch bewirkten Streckendifferenzen im in Fig.5-7 gezeigten Optikteil 10c bewirkt.

Fig.11 veranschaulicht die Verteilung der E-Felder bzw. deren Fourier-Transformierten FT(E) in der Frequenz-Domäne für das erste Ausführungsbeispiel für den Basisteil 10a einer erfindungsgemässen Entfernungsmessanordnung mit seiner Kohärenzverzögerungseinheit. Das Frequenz-Spektrum besteht zu einem Zeitpunkt t aus Beiträgen verschiedener elektromagnetischer Felder, wobei jeder Kanal i ein Signal des lokalen Oszillators $e(f_{Li},t)$ sowie ein Signal des Ziels bzw. der Zieloberfläche $e(f_{Ti},t)$ aufweist. Die Kanäle sind dabei in der Frequenz-Domäne jeweils wie folgt beabstandet

$$\Delta f_{ch\_i} = \frac{2\Delta L_i \cdot \gamma}{c}$$

wobei c die Lichtgeschwindigkeit und $\gamma$ die Durchstimmgeschwindigkeit der Modulation der Laserquelle, z.B. 20 THz/ms, bezeichnen.

Neben den großen Abständen $\Delta f_{ch\_i}$ der Kanäle zueinander teilt sich jeder Kanal in die beiden Signalanteile des lokalen Oszillators LO, d.h. des Referenzarms, und des Ziels, d.h. des Messarms, mit dem Abstand

$$\delta f_{ch\_i} = \frac{2\delta L_i \cdot \gamma}{c}, mit \ \delta L_i = L_{t\arg et\_i} - L_{LO\_i}$$

wobei $L_{LO\_i}$ und $L_{target\_i}$ die jeweiligen Längen von Referenzarm und Messarm bezeichnen, so dass deren Differenz $\delta L_i$ der gesuchten Distanz zur Oberfläche entspricht. Die Bestimmung dieser gesuchten Distanzen zu der zu vermessenden Oberfläche ist grundsätzlich aus dem Stand der Technik bekannt, wie er beispielsweise in der WO 2009/036861 oder der europäischen Patentanmeldung mit der Anmeldenummer 11171582.7 beschrieben wird.

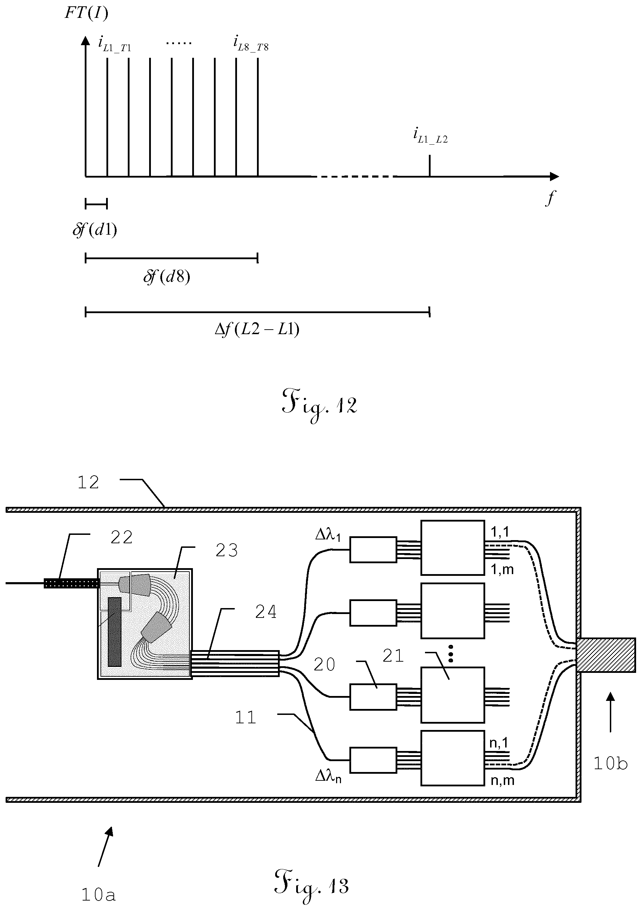

Fig.12 zeigt die korrespondierende schematische Darstellung der aus mehreren Interferogrammen bestehenden Verteilung der detektierten Intensitäten bzw. deren Fourier-Transformierten FT(I) in der Frequenz-Domäne. Die Peaks im Fourier-Spektrum lassen sich durch Bandpassfilterung im Signalprocessing trennen und separat auswerten.

Der Ansatz des Frequenz-Multiplexings mit einer Verwendung von Verzögerungsstrecken kann auch mit dem Ansatz einer chromatischen Aufteilung der Kanäle kombiniert werden, wie dies in Fig.13 für ein zweites Ausführungsbeispiel für den Basisteil der erfindungsgemässen Entfernungsmessanordnung schematisch dargestellt wird. Hier werden im Basisteil 10a des Probenkopfs beide Ansätze zugleich realisiert und miteinander kombiniert.

Im Gehäuse 12 des Basisteils 10a ist der Monomode-Faser mit Ferrule 22 ein Arrayed-Waveguide-Grating als chromatischer Strahlteiler 23 nachgeordnet. Durch ein solches Arrayed-Waveguide-Grating kann chromatisches Multiplexing erzeugt werden, indem der Durchstimmbereich bzw. die Wellenlängenrampe in verschiedene Zweige oder Teilbereiche unterteilt wird, so dass die Wellenlängenrampe in einer der Zahl der Kanäle entsprechenden Anzahl von Wellenlängenbänder gleicher Breite aufgespalten wird, was einer chromatischen Trennung entspricht. Für einen Durchstimmbereich zwischen 1500 und 1600 nm können Komponenten aus dem Bereich der Telekommunikation für das c- und 1-Band zum Einsatz kommen. So werden Arrayed-Waveguide-Gratings in diesem Gebiet verwendet, um einen Kanal in verschiedene getrennte sog. ITU-Kanäle aufzuteilen. Dabei hängt die Breite der Kanäle vom verwendeten ITU-Standard ab, wobei diese von 50, 100 oder 200 GHz bis zu wenigen Nanometern reicht. Durch einen solchen chromatischern Strahlteiler 23 kann eine chromatische bzw. spektrale Aufspaltung der Laserstrahlung in verschiedene, insbesondere eine Vielzahl von Kanälen realisiert werden, wobei das hier beispielhaft als chromatischer Strahlteiler 23 gezeigte Arrayed-Waveguide-Grating wie ein kompaktes Spektrometer wirkt. Am Ausgang des chromatischen Strahlteilers 23 wird die in Kanäle aufgeteilte Messstrahlung über eine Mehrfaser-Ferrule 24 in einzelne optische Fasern 11 eingekoppelt, denen jeweils einer der Frequenz- bzw. Wellenlängenbereiche $\Delta\lambda_1$-$\Delta\lambda_n$ zugeordnet ist. Die Fasern 11 werden ihrerseits jeweils zu einem nicht-chromatischen 1xm-Strahlteiler 20 geführt, wie er auch in Fig.10 bzw. dem ersten Ausführungsbeispiel für den Basisteil einer erfindungsgemässen Entfernungsmessanordnung zum Einsatz kommt. Jedem der Strahlteiler 20 ist wiederum eine Kohärenzverzögerungseinheit 21 nachgeordnet, deren von 1,1 bis n,m indizierte Ausgänge zu einem Faserbündel zusammengeführt und über die Verbindungsröhre 10b in zu den anderen Ausführungsbeispielen gleicher Weise zum Optikteil geführt werden. Der Optikteil kann seinerseits entsprechend den Ausführungsbeispielen in Fig.5-7 ausgestaltet sein. Die in diesem Beispiel gezeigte Abfolge von chromatischer Strahlteilung mit nachfolgender Kohärenzverzögerungseinheit ist nicht zwingend und kann insbesondere in ihrer Reihenfolge auch umgekehrt werden.

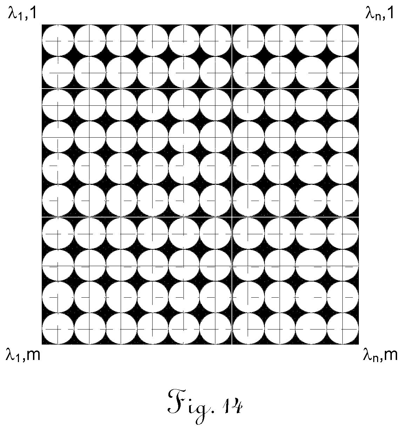

Die Aperturen der verschiedenen Kanäle können für das zweite Ausführungsbeispiel für den Basisteil insbesondere in der in Fig.14 gezeigten Abfolge matrixartig angeordnet werden, wobei die Zuweisung eines spaltenweise unterschiedlichen chromatischen Bereichs erfolgt, die von einer zeilenweise variierenden Verzögerung überlagert ist, so dass jeder einzelne Kanal durch seine eigene Kombination von Wellenlängenbereich und Verzögerung trennbar ausgestaltet und damit das empfangene Signal zuordenbar ist.

**Patentansprüche**

1.  Interferometrische Entfernungsmessanordnung zur Vermessung von Oberflächen (4), insbesondere nach dem Prinzip der optischen Kohärenztomographie, mit wenigstens

    - einer durchstimmbaren Laserquelle (1) mit einer Kohärenzlänge zum Erzeugen von mit einer Wellenlängenrampe modulierten Messstrahlung (MS), wobei die Kohärenzlänge der Laserquelle (1) den Messbereich definiert,
    - einem optischen Strahlengang mit

        o einer Sendeoptik zum Emittieren der Messstrahlung (MS) auf die Oberfläche (4),
        o einer Empfangsoptik zum Empfangen der von der Oberfläche zurückgestreuten Messstrahlung (MS),
        o einem Interferometer bestehend aus einem Messarm und einem Referenzarm, insbesondere mit einem teilweise gemeinsamen Strahlengang von Mess- und Referenzarm,

    - einem Strahlungsdetektor und einer Auswerteinheit zum Bestimmen der Entfernung von einem Bezugspunkt der Entfernungsmessanordnung zur Oberfläche (4),
    - einem Strahlteiler (20,25), welcher $n \geq 2$ Kanäle für die parallele Emission von Messstrahlung (MS) definiert, **dadurch gekennzeichnet, dass** den Kanälen für ein Frequenz-Multiplexing jeweils ein unterschiedlicher Teilbereich des durch die Kohärenzlänge definierten Messbereichs zugewiesen wird, wobei die Auswerteeinheit eingerichtet ist, die Kanäle in der Fourier-Domäne zu trennen, insbesondere wobei die Kanäle in der Sendeoptik zeilen- oder matrixartig angeordnet sind.

2.  Entfernungsmessanordnung nach Anspruch 1, **dadurch gekennzeichnet, dass** der durch die Kohärenzlänge definierte Messbereich in Teilbereiche gleicher Messtiefe aufgespalten wird.

3.  Entfernungsmessanordnung nach Anspruch 1 oder 2, **dadurch gekennzeichnet, dass** wenigstens n-1 Kanäle jeweils eine verzögernde Aufteilungsstrecke aufweisen, insbesondere Glaselemente (14) unterschiedlicher Länge.

4.  Entfernungsmessanordnung nach einem der vorangehenden Ansprüche, **dadurch gekennzeichnet, dass** die Kanäle für die parallele Emission von Messstrahlung (MS) durch eine Folge von wenigstens n-1 Strahlteilern (25) zu Auskopplung der Kanäle definiert werden, wobei die Strahlteiler (25) eine in der Folge aufsteigende Reflektivität ihrer Strahlteilerbeschichtung aufweisen.

5.  Entfernungsmessanordnung nach einem der vorangehenden Ansprüche, **dadurch gekennzeichnet, dass** wenigstens n-1 Kanäle jeweils eine Kohärenzverzögerungsstrecke zur Vermeidung von Übersprechen aufweisen, insbesondere optische Fasern (L1-L8), deren relativer Längenabstand von Kanal zu Kanal jeweils grösser als die Kohärenzlänge ist.

6.  Entfernungsmessanordnung nach einem der vorangehenden Ansprüche, **dadurch gekennzeichnet, dass** Sendeoptik und Empfangsoptik als kombinierte Sende- und Empfangsoptik (10b) ausgebildet sind, welche mit dem Strahlungsdetektor über eine, insbesondere eine einzige Monomode-Faser gekoppelt ist.

7.  Entfernungsmessanordnung nach einem der vorangehenden Ansprüche, **dadurch gekennzeichnet, dass** der Strahlteiler (20) ein 2x2 Fused Fiber Coupler, Dünnfilm-Filter oder Planar-Lightwave-Circuit ist.

8.  Entfernungsmessanordnung nach einem der vorangehenden Ansprüche, **dadurch gekennzeichnet, dass** den Kanälen unterschiedliche Teilbereiche der Wellenlängenrampe zugewiesen werden, insbesondere die Wellenlängenrampe durch einen Strahlteiler in Wellenlängenbänder gleicher Breite aufgespalten wird.

9.  Entfernungsmessanordnung nach Anspruch 8, **dadurch gekennzeichnet, dass** die Teilbereiche der Wellenlängenrampe durch chromatische Trennung, insbesondere durch einen chromatischen Strahlteiler (23) erzeugt werden.

10. Interferometrisches Entfernungsmessverfahren zur Vermessung von Oberflächen (4), insbesondere nach dem Prinzip der optischen Kohärenztomographie, mit wenigstens einem

    - Erzeugen von mit einer Wellenlängenrampe modulierten Messstrahlung (MS) durch eine Laserquelle (1) mit einer Kohärenzlänge, wobei die Kohärenzlänge der Laserquelle (1) den Messbereich definiert,
    - Emittieren der Messstrahlung (MS) auf die Oberfläche (4),
    - Empfangen der von der Oberfläche zurückgestreuten Messstrahlung (MS) mit einem interferometrischen Bestimmen der Entfernung von einem Bezugspunkt der Entfernungsmessanordnung zur Oberfläche (4),
    - Emittieren der Messstrahlung (MS) parallel über n ≥ 2 Kanäle, **dadurch gekennzeichnet, dass** den Kanälen für ein Frequenz-Multiplexing jeweils ein unterschiedlicher Teilbereich des durch die Kohärenzlänge definierten Messbereichs zugewiesen wird, wobei mittels Signalverarbeitung ein Trennen der Kanäle in der Fourier-Domäne erfolgt.

11. Entfernungsmessverfahren nach Anspruch 10, **dadurch gekennzeichnet, dass** der durch die Kohärenzlänge definierte Messbereich in Teilbereiche gleicher Messtiefe aufgespalten wird.

12. Entfernungsmessverfahren nach einem der vorangehenden Ansprüche 10 bis 11, **dadurch gekennzeichnet, dass** die Messstrahlung (MS) in wenigstens n-1 Kanälen jeweils so verzögert wird, dass jedem der Kanäle ein unterschiedlicher Teilbereich zugeordnet ist.

13. Entfernungsmessverfahren nach einem der vorangehenden Ansprüche 10 bis 12, **dadurch gekennzeichnet, dass** die Messstrahlung (MS) in wenigstens n-1 Kanälen zur Vermeidung von Übersprechen jeweils so verzögert wird, dass der zur Verzögerung korrespondierende relative Längenabstand von Kanal zu Kanal jeweils grösser als die Kohärenzlänge der Laserquelle (1) ist.

14. Entfernungsmessverfahren nach einem der vorangehenden Ansprüche 10 bis 13, **dadurch gekennzeichnet, dass** den Kanälen für einen gegebenen Emissionszeitpunkt unterschiedliche Teilbereiche der Wellenlängenrampe zugewiesen werden, insbesondere die Wellenlängenrampe in Wellenlängenbänder gleicher Breite aufgespalten wird.

15. Entfernungsmessverfahren nach Anspruch 14, **dadurch gekennzeichnet, dass** die Teilbereiche der Wellenlängenrampe durch chromatische Trennung erzeugt werden.

**Claims**

1.  An interferometric distance measuring arrangement for measuring surfaces (4), in particular according to the principle of optical coherence tomography, comprising at least

    - a tunable laser source (1) having a coherence length for generating measurement radiation (MS) modulated with a wavelength ramp, wherein the coherence length of the laser source (1) defines the measurement range,
    - an optical beam path having

      ○ a transmitting optical unit for emitting the measurement radiation (MS) onto the surface (4),
      ○ a receiving optical unit for receiving the measurement radiation (MS) backscattered from the surface,
      ○ an interferometer consisting of a measurement arm and a reference arm, in particular with a partly common beam path of measurement arm and reference arm,

    - a radiation detector and an evaluation unit for determining the distance from a reference point of the distance measuring arrangement to the surface (4),
    - a beam splitter (20, 25), which defines n ≥ 2 channels for the parallel emission of measurement radiation (MS),

    **characterized in that** the channels are allocated, for a frequency multiplexing, in each case a different subrange of the measurement range defined by the coherence length, wherein the evaluation unit is configured to separate the channels in the Fourier domain, in particular wherein the channels are arranged in the transmitting optical unit in a line- or matrix-like fashion.

2.  The distance measuring arrangement as claimed in claim 1, **characterized in that** the measurement range defined by the coherence length is split into subranges of identical measurement depth.

3. The distance measuring arrangement as claimed in claim 1 or 2,
**characterized in that**
at least n-1 channels in each case have a delaying division section, in particular glass elements (14) of different lengths.

4. The distance measuring arrangement as claimed in any one of the preceding claims,
**characterized in that**
the channels for the parallel emission of measurement radiation (MS) are defined by a sequence of at least n-1 beam splitters (25) for coupling out of the channels, wherein the beam splitters (25) have an increasing reflectivity of their beam splitter coating in the sequence.

5. The distance measuring arrangement as claimed in any one of the preceding claims,
**characterized in that**
at least n-1 channels in each case have a coherence delay section for avoiding crosstalk, in particular optical fibers (L1-L8), whose relative length spacing from channel to channel is in each case greater than the coherence length.

6. The distance measuring arrangement as claimed in any one of the preceding claims,
**characterized in that**
transmitting optical unit and receiving optical unit are embodied as a combined transmitting and receiving optical unit (10b) which is coupled to the radiation detector via a, in particular a single, monomode fiber.

7. The distance measuring arrangement as claimed in any one of the preceding claims,
**characterized in that**
the beam splitter (20) is a 2x2 fused fiber coupler, thin-film filter or planar lightwave circuit.

8. The distance measuring arrangement as claimed in any one of the preceding claims,
**characterized in that**
the channels are allocated different subranges of the wavelength ramp, in particular the wavelength ramp is split into wavelength bands of identical width by a beam splitter.

9. The distance measuring arrangement as claimed in claim 8,
**characterized in that**
the subranges of the wavelength ramp are generated by chromatic separation, in particular by a chromatic beam splitter (23).

10. An interferometric distance measuring method for measuring surfaces (4), in particular according to the principle of optical coherence tomography, comprising at least

- generating measurement radiation (MS) modulated with a wavelength ramp by means of a laser source (1) having an coherence length, wherein the coherence length of the laser source (1) defines the measurement range,
- emitting the measurement radiation (MS) onto the surface (4),
- receiving the measurement radiation (MS) backscattered from the surface together with interferometrically determining the distance from a reference point of the distance measuring arrangement to the surface (4),
- emitting the measurement radiation (MS) in parallel via n $\geq$ 2 channels,

**characterized in that**
the channels are allocated, for a frequency multiplexing, in each case a different subrange of the measurement range defined by the coherence length, wherein a separation of the channels in the Fourier domain is effected by means of signal processing.

11. The distance measuring method as claimed in claim 10,
**characterized in that**
the measurement range defined by the coherence length is split into subranges of identical measurement depth.

12. The distance measuring method as claimed in either of the preceding claims 10 and 11,
**characterized in that**
the measurement radiation (MS) is delayed in at least n-1 channels in each case such that each of the channels is assigned a different subrange.

13. The distance measuring method as claimed in any one of the preceding claims 10 to 12,
**characterized in that**
the measurement radiation (MS) is delayed in at least n-1 channels for avoiding crosstalk in each case such that the relative length spacing corresponding to the delay from channel to channel is in each case greater than the coherence length of the laser source (1).

14. The distance measuring method as claimed in any one of the preceding claims 10 to 13,
**characterized in that**
the channels are allocated different subranges of the wavelength ramp for a given emission instant, in particular the wavelength ramp is split into wavelength bands of identical width.

**15.** The distance measuring method as claimed in claim 14,
**characterized in that**
the subranges of the wavelength ramp are generated by chromatic separation.

## Revendications

**1.** Dispositif de mesure de distance interférométrique pour la mesure de surfaces (4), en particulier selon le principe de la tomographie en cohérence optique, avec au moins

- une source laser accordable (1) avec une longueur de cohérence pour produire un rayonnement de mesure (MS) modulé avec une rampe de longueur d'onde, la longueur de cohérence de la source laser (1) définissant la plage de mesure,
- un trajet de faisceau optique avec

  ∘ une optique d'émission pour émettre le rayonnement de mesure (MS) sur la surface (4),
  ∘ une optique de réception pour recevoir le rayonnement de mesure (MS) rétrodiffusé par la surface,
  ∘ un interféromètre composé d'un bras de mesure et d'un bras de référence, en particulier avec un trajet de faisceau partiellement commun du bras de mesure et du bras de référence,

- un détecteur de rayonnement et une unité d'évaluation pour déterminer la distance d'un point de référence du dispositif de mesure de distance par rapport à la surface (4),
- un séparateur de faisceaux (20, 25) qui définit $n \geq 2$ canaux pour l'émission parallèle du rayonnement de mesure (MS),

**caractérisé en ce qu'**une plage partielle différente de la plage de mesure définie par la longueur de cohérence est associée respectivement aux canaux pour un multiplexage en fréquence, cependant que l'unité d'évaluation est agencée pour séparer les canaux dans le domaine de Fourier, en particulier cependant que les canaux sont placés dans l'optique d'émission à la manière de lignes ou d'une matrice.

**2.** Dispositif de mesure de distance selon la revendication 1, **caractérisé en ce que** la plage de mesure définie par la longueur de cohérence est divisée en plages partielles de même profondeur de mesure.

**3.** Dispositif de mesure de distance selon la revendication 1 ou 2, **caractérisé en ce qu'**au moins n-1 canaux présentent respectivement un trajet de division retardateur, en particulier des éléments en verre (14) de différente longueur.

**4.** Dispositif de mesure de distance selon l'une des revendications précédentes, **caractérisé en ce que** les canaux pour l'émission parallèle de rayonnement de mesure (MS) sont définis par une séquence d'au moins n-1 séparateurs de faisceau (25) pour le découplage des canaux, les séparateurs de faisceau (25) présentant une réflectivité de leur enduction de séparateurs de faisceau qui est croissante dans la séquence.

**5.** Dispositif de mesure de distance selon l'une des revendications précédentes, **caractérisé en ce qu'**au moins n-1 canaux présentent respectivement un trajet retardateur de cohérence pour éviter la diaphonie, en particulier des fibres optiques (L1-L8) dont l'écart de longueur relatif de canal à canal est respectivement plus grand que la longueur de cohérence.

**6.** Dispositif de mesure de distance selon l'une des revendications précédentes, **caractérisé en ce que** l'optique d'émission et l'optique de réception sont configurées comme une optique d'émission et une optique de réception combinée (10b) qui est couplée au détecteur de rayonnement par une fibre, en particulier une fibre monomode unique.

**7.** Dispositif de mesure de distance selon l'une des revendications précédentes, **caractérisé en ce que** le séparateur de faisceau (20) est un coupleur 2x2 à fibres fusionnées, un filtre à couche mince ou un circuit à ondes lumineuses planaire.

**8.** Dispositif de mesure de distance selon l'une des revendications précédentes, **caractérisé en ce que** différentes plages partielles de la rampe de longueur d'onde sont associées aux canaux, en particulier la rampe de longueur d'onde est séparée par un séparateur de faisceau en bandes de longueur d'onde de même largeur.

**9.** Dispositif de mesure de distance selon la revendication 8, **caractérisé en ce que** les plages partielles de la rampe de longueur d'onde sont produites par une séparation chromatique, en particulier par un séparateur de faisceau chromatique (23).

**10.** Procédé de mesure de distance interférométrique pour la mesure de surfaces (4), en particulier selon le principe de la tomographie en cohérence optique, avec au moins

- production de rayonnement de mesure (MS) modulé avec une rampe de longueur d'onde par une source laser (1) avec une longueur de cohérence, la longueur de cohérence de la source laser (1) définissant la plage de mesure,
- émission du rayonnement de mesure (MS) sur la surface (4),
- réception du rayonnement de mesure (MS) rétrodiffusé par la surface avec une détermination interférométrique de la distance d'un point de référence du dispositif de mesure de distance par rapport à la surface (4),
- émission du rayonnement de mesure (MS) parallèlement par $n \geq 2$ canaux, **caractérisé en ce qu'**une plage partielle différente de la plage de mesure définie par la longueur de cohérence est respectivement associée aux canaux pour un multiplexage en fréquence, cependant qu'une séparation des canaux dans le domaine de Fourier est effectuée par traitement de signal.

11. Procédé de mesure de distance selon la revendication 10, **caractérisé en ce que** la plage de mesure définie par la longueur de cohérence est divisée en plages partielles de même profondeur de mesure.

12. Procédé de mesure de distance selon l'une des revendications précédentes 10 à 11, **caractérisé en ce que** le rayonnement de mesure (MS) est retardé en au moins n-1 canaux respectivement de telle manière qu'une plage partielle différente est associée à chacun des canaux.

13. Procédé de mesure de distance selon l'une des revendications précédentes 10 à 12, **caractérisé en ce que** le rayonnement de mesure (MS) est retardé en au moins n-1 canaux pour éviter la diaphonie de telle manière que l'écart de longueur de canal à canal qui correspond au retard est respectivement plus grand que la longueur de cohérence de la source laser (1).

14. Procédé de mesure de distance selon l'une des revendications précédentes 10 à 13, **caractérisé en ce que** différentes zones partielles de la rampe de longueur d'onde sont associées aux canaux, en particulier la rampe de longueur d'onde est divisée par un séparateur de faisceau en bandes de longueur d'onde de même largeur.

15. Procédé de mesure de distance selon la revendication 14, **caractérisé en ce que** les zones partielles de la rampe de longueur d'onde sont produites par une séparation chromatique.

$\mathscr{F}ig. 1$

$\mathscr{F}ig. 2$

$\mathscr{F}ig. 3$

Fig. 4

Fig. 5

$\mathcal{Fig}.6$

$\mathcal{Fig}.7$

Fig. 8

Fig. 9

$\mathfrak{Fig.}\ 10$

$\mathfrak{Fig.}\ 11$

$FT(I)$

$i_{L1\_T1}$ ..... $i_{L8\_T8}$

$i_{L1\_L2}$

$f$

$\delta f(d1)$

$\delta f(d8)$

$\Delta f(L2 - L1)$

Fig. 12

12

22

23

$\Delta\lambda_1$

24

20 21

11

$\Delta\lambda_n$

1,1
1,m

n,1
n,m

10b

10a

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4325337
- DE 4325347
- US 5402582 A
- EP 1474650 A

- WO 2009036861 A
- EP 11171582 A
- WO 2009036861 A1


**In der Beschreibung aufgeführte Nicht-Patentliteratur**

- **BEAU A STANDISH.** In vivo endoscopic multibeam optical coherence tomography. *Physics in Medicin and Biology,* 2010, vol. 55, 615-622
- **J. SUN et al.** MEMS-based endoscopic OCT. *Int. J. of Opt.,* 2011
- **T. KLEIN et al.** Megahertz OCT for ultrawide-field retinal imaging with a 1050nm Fourier domain mode-locked laser. *Opt. Express,* 2011, vol. 19, 3044-3062

- **Y.K. TAO et al.** High-speed complex conjugate resolved retinal spectral domain optical coherence tomography using sinusoidal phase modulation. *Opt. Lett.,* 2007, vol. 32, 2918
- **T. DRESEL et al.** Three-dimensional sensing of rough surfaces by coherence radar. *Appl. Opt.,* 1992, vol. 31, 919
- **S.W. LEE et al.** Line-field optical coherence tomography using frequency-sweeping source. *IEEE J. Selec. Top. Quant. Electr.,* 2008, vol. 14, 50